# FASCICULE DE BREVET EUROPEEN

(11) **EP 3 107 165 B1**
(45) Date de publication et mention de la délivrance du brevet: **12.02.2020**
(21) Numéro de dépôt: 16175078.1
(22) Date de dépôt: 17.06.2016
(51) Int. Cl.: H02G 3/04, H02G 3/30, H02G 3/00, F16L 3/00

(54) **SYSTÈME DE FIXATION PAR SUSPENSION DE MOYENS D'ÉQUIPEMENT ÉLECTRIQUE**
BEFESTIGUNGSSYSTEM DURCH AUFHÄNGUNG VON ELEKTRISCHEN AUSRÜSTUNGSMITTELN
HOOKING MEANS FOR AN ELECTRICAL EQUIPMENT

(30) Priorité: 19.06.2015 FR 1501279
(43) Date de publication de la demande: 21.12.2016
(73) Titulaire: NAVAL GROUP, 75015 Paris (FR)
(72) Inventeur: BARZIC, Olivier, 56600 Lanester (FR); INQUEL, Dominique, 56100 Lorient (FR); LAGREE, Renan, 56400 Le Bono (FR)
(74) Mandataire: Lavoix

(56) Documents cités:
- DE-A1- 19 532 681
- FR-A1- 2 911 438
- GB-A- 1 521 897
- US-A- 5 118 066

## Description

La présente invention concerne un système de fixation par suspension de moyens d'équipement électrique, applicable notamment à un navire.

On trouvera des exemples de systèmes de cette nature dans les documents DE19532681, US5118066, FR2911438 et GB1521897.

Plus particulièrement, l'invention se rapporte à un système de fixation par suspension de moyens d'équipement, sous des moyens d'ancrage notamment associés au plafond d'un local d'un navire.

Lorsque l'on parle de plafond de local dans la présente demande, on parle de façon générale, des parties hautes de ce local, à proximité desquelles on fixe par exemple des chemins de câble, des appareils électriques quelconques...

D'une façon générale, ce type de systèmes de fixation comporte des moyens en forme de colonne de suspension, dont une extrémité supérieure comporte des moyens d'accrochage sur les moyens d'ancrage et dont l'extrémité inférieure comporte des moyens de fixation des moyens d'équipement électrique.

Dans l'état de la technique, ces différents éléments sont fixés les uns aux autres par exemple par soudage, vissage...

C'est la raison pour laquelle on utilise dans ce domaine technique particulier, le terme d' « attente soudée », pour assurer la fixation de ces pièces.

C'est sur ces systèmes que sont fixés des appareils électriques voire des chemins de câbles.

En effet, ces appareils ou ces chemins de câble sont soit fixés directement soit fixés par l'intermédiaire de supports secondaires, sur ceux-ci.

Les différents éléments sont alors soudés ou vissés suivant une orientation/angle et à une longueur/hauteur, définis lors de la conception du local et plus généralement du navire, conformément à un plan d'aménagement de celui-ci.

On conçoit cependant que la mise en place par exemple de nappes de câbles électriques ou d'appareils électriques dans ce type d'applications, est relativement complexe.

En effet, les supports étant soudés ou vissés et figés en position, il peut être très difficile d'adapter la fixation correspondante en cas de demande de modification, de changement, d'adaptation, ou autre.

Par ailleurs, les études d'aménagement du local sont également relativement complexes dans la mesure où elles doivent tenir compte de l'implantation de ces appareils.

Le but de l'invention est donc de résoudre ces problèmes en proposant une solution qui permette de simplifier les montages en position de ce type de matériel, tout en augmentant la polyvalence et la facilité d'adaptation du système et en réduisant les coûts de montage.

A cet effet, l'invention a pour objet un système de fixation par suspension de moyens d'équipement électrique sous des moyens d'ancrage notamment associés au plafond d'un local d'un navire, selon la revendication 1.

Suivant d'autres caractéristiques du système selon l'invention, prises seules ou en combinaison :
- il comporte des moyens de blocage temporaire en position des deux parties télescopiques de la colonne lors de la phase de montage des moyens d'équipement électrique ;
- les moyens de blocage temporaire en position des deux parties télescopiques de la colonne comprennent un organe de serrage traversant la partie externe de colonne et adapté pour venir en appui contre la partie interne de celle-ci ;
- l'organe de serrage comporte une vis engagée dans un trou taraudé de la partie externe de colonne ;
- il comporte des moyens de fixation définitive en position des deux parties de colonne une fois le montage des moyens d'équipement électrique réalisé ;
- les moyens de fixation définitive comprennent des moyens choisis dans le groupe comprenant en outre:
   - au moins une vis auto-foreuse traversant les deux parties de colonne,
   - au moins un point de soudure des deux parties de colonne,
   - au moins un rivet traversant les deux parties de colonne.
- les moyens d'ancrage notamment associés au plafond du local, comprennent des rails de support ;
- les moyens d'équipement électrique comporte en outre des appareils électriques ;
- les moyens d'équipement électrique comporte en outre des moyens formant chemin de câble électrique.

L'invention sera mieux comprise à la lecture de la description qui va suivre, donnée uniquement à titre d'exemple et faite en se référant aux dessins annexés, sur lesquels :
- la figure 1 représente un exemple de réalisation d'une structure de fixation par suspension de l'état de la technique,
- les figures 2 et 3 représentent respectivement des vues de face et de côté en coupe schématique, illustrant la structure et le fonctionnement de moyens en forme de colonne de suspension entrant dans la constitution d'un système de fixation selon l'invention et
- les figures 4 et 5 représentent des exemples de moyens d'équipement électrique pouvant être fixés grâce à un système selon l'invention.

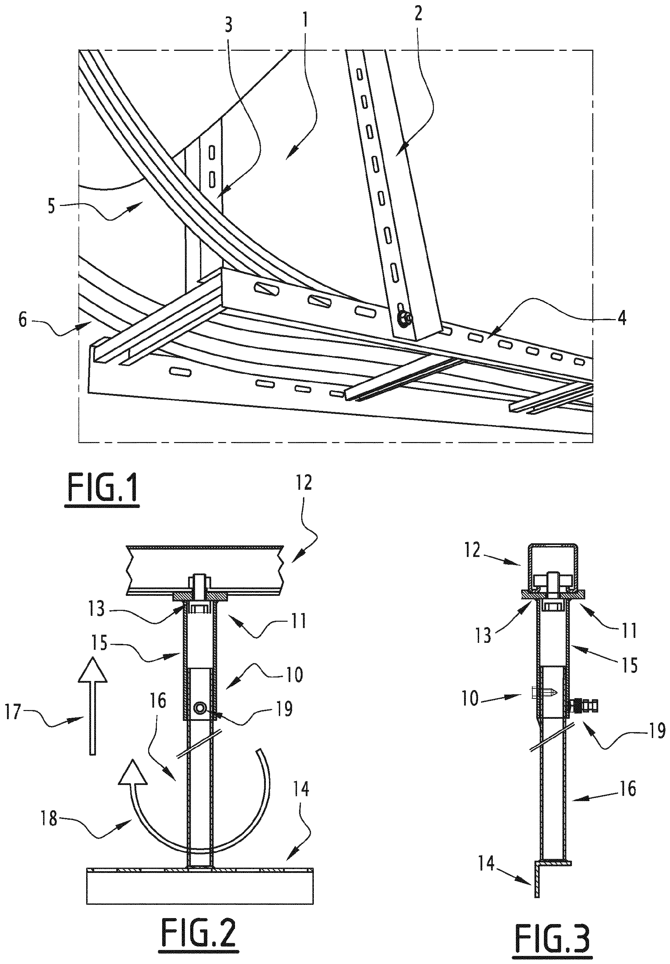

On a illustré sur la figure 1, une partie d'un local par exemple d'un navire.

Bien entendu d'autres applications du système de suspension selon l'invention, sont possibles.

Plus particulièrement, on a représenté sur cette figure 1, un système de suspension d'un chemin de câble de l'état de la technique.

Sur cette figure 1, le plafond du local est désigné par la référence générale 1, et des colonnes de suspension respectivement 2 et 3, du chemin de câble, sont accrochées sur ce plafond.

Cet accrochage est obtenu par exemple par soudage ou fixation définitive d'une façon ou d'une autre, des extrémités supérieures correspondantes de ces colonnes par exemple sur des attentes soudées.

Dans leur partie inférieure, ces colonnes sont par exemple boulonnées sur le chemin de câble, comme celui qui est désigné par la référence générale 4 sur cette figure 1.

Chaque colonne de suspension 2 et 3 présente alors un point de fixation sur le chemin de câble 4.

Sur cette figure 1, les câbles logés dans le chemin 4, sont désignés par exemple par les références 5 et 6.

On conçoit que le montage et la mise en place de ces différents éléments, sont relativement complexes, dans la mesure où la structure de suspension est complètement figée après soudage des attentes et fixation des colonnes sur ces attentes.

Pour résoudre ces problèmes, et afin de donner un peu de souplesse au système de fixation, on propose un système de fixation réglable tel que celui illustré sur les figures 2 et 3.

On reconnaît en effet sur ces figures 2 et 3, un système de fixation par suspension de moyens d'équipement électrique, sous des moyens d'ancrage notamment associés au plafond d'un local d'un navire.

En fait, ce système de fixation comporte des moyens en forme de colonne de suspension, désignés par la référence générale 10 sur ces figures, dont l'extrémité supérieure comporte des moyens d'accrochage 11, sur des moyens d'ancrage associés au plafond du local et désignés par exemple par la référence générale 12.

Ces moyens d'ancrage 12 sont par exemple constitués par un rail de fixation de type approprié.

Les moyens d'accrochage 11 comprennent par exemple des mécanismes à vis/écrou ou boulons ou autres, tels que désignés par la référence générale 13 sur ces figures.

Il va de soi bien entendu que d'autres modes de réalisation encore de ces moyens peuvent être envisagés.

L'extrémité inférieure des moyens en forme de colonne de suspension 10 comporte des moyens de fixation et d'accrochage des moyens d'équipement électrique dans le local.

Ces moyens de fixation sont désignés par la référence générale 14 sur ces figures et présentent alors n'importe quelle structure appropriée et adaptée aux moyens d'équipement électrique à accrocher.

Ces moyens de fixation peuvent par exemple se présenter sous la forme de platine ou de coulisse, de formes adaptées aux moyens de fixation de l'appareil électrique à fixer ou aux chemins de câble à suspendre.

Selon l'invention, les moyens en forme de colonne de suspension, désignés par la référence générale 10 sur ces figures, comportent au moins deux parties télescopiques l'une dans l'autre et désignées par les références générales respectivement 15 et 16 sur ces figures.

En fait, ces deux parties 15 et 16 de colonne sont télescopiques l'une dans l'autre, pour permettre en outre un réglage de distance et donc en hauteur, entre les moyens d'ancrage et les moyens d'équipement électrique, lors de la phase de montage de ceux-ci.

Ce réglage est schématisé par la flèche verticale désignée par la référence générale 17 sur ces figures.

En effet, le fait de disposer de parties télescopiques l'une dans l'autre, permet à n'importe quel opérateur de montage de régler la distance entre les moyens d'ancrage et les moyens d'équipement électrique et ainsi d'adapter la hauteur de fixation.

De plus, les deux parties télescopiques respectivement 15 et 16 peuvent également être déplaçables en rotation l'une par rapport à l'autre, pour permettre un réglage angulaire en position entre ces moyens d'ancrage et les moyens d'équipement électrique, lors de la phase de montage de ceux-ci.

Ceci est illustré par la flèche 18 sur cette figure 2.

Dans ce cas également, l'opérateur de montage peut adapter l'orientation de l'appareil par rapport aux moyens d'ancrage associés par exemple au plafond du local du navire.

Bien entendu, ce système comporte des moyens de blocage temporaire en position des deux parties télescopiques et réglables à rotation de la colonne de suspension, lors de la phase de montage des moyens d'équipement électrique et d'aménagement du local.

Ceci permet alors à l'opérateur d'adapter et de positionner correctement les différents organes en position et de figer temporairement la position en particulier des parties télescopiques des colonnes de suspension.

En fait et comme cela est illustré, les moyens de blocage temporaire utilisés sont désignés par la référence générale 19 sur ces figures.

Ces moyens de blocage temporaire peuvent être constitués par exemple par un organe de serrage traversant la partie externe de colonne et adapté pour venir en appui contre la partie interne de celle-ci, pour bloquer par serrage, ces deux parties l'une par rapport à l'autre.

L'organe de serrage peut tout simplement être constitué par une vis engagée dans un trou taraudé de la partie externe de colonne et adaptée pour venir en appui contre la partie interne de celle-ci, comme cela est illustré.

Bien sûr une fois les différents montages réalisés, il peut alors être nécessaire de figer et de fixer de façon définitive en position, les deux parties de colonne l'une par rapport à l'autre.

Là encore différents moyens de fixation définitive peuvent être utilisés.

Ainsi par exemple, ces moyens de fixation définitive peuvent comporter des moyens choisis dans le groupe comprenant en outre :
- au moins une vis auto-foreuse traversant les deux parties de colonne,
- au moins un point de soudure des deux parties de colonne,
- au moins un rivet traversant les deux parties de colonne.

Bien entendu d'autres modes de réalisation et d'autres moyens encore peuvent être envisagés.

Comme cela a été indiqué précédemment, les moyens d'ancrage notamment associés au plafond du local, peuvent comporter des rails de support ou autres.

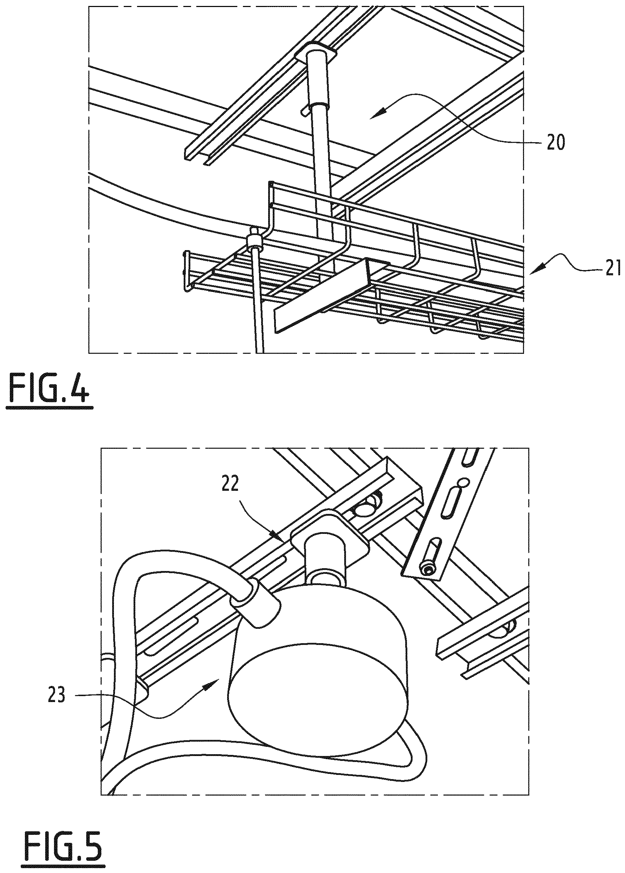

Ceci permet alors, comme cela est illustré sur les figures 4 et 5, à de tels systèmes de fixation d'être utilisés pour assurer la suspension de chemins de câble ou d'appareils électriques quelconques.

Sur la figure 4, on a illustré l'utilisation d'un système de suspension 20 selon l'invention, pour assurer le montage et la suspension d'un chemin de câble 21.

Sur la figure 5, on a illustré l'utilisation d'un système de suspension 22 selon l'invention, pour assurer le montage et la suspension par exemple d'un détecteur incendie désigné par la référence générale 23.

Bien entendu d'autres applications encore peuvent être envisagées.

On conçoit que ce type de systèmes présente alors un certain nombre d'avantages, notamment au niveau de la simplification du montage des équipements à bord, ce qui permet de faciliter le travail des opérateurs, de gagner du temps de montage et d'améliorer la sécurité au travail des opérateurs.

Bien entendu d'autres modes de réalisation peuvent être envisagés.

## Revendications

1. Système de fixation par suspension de moyens d'équipement électrique sous des moyens d'ancrage notamment associés au plafond d'un local d'un navire, du type comportant des moyens en forme de colonne de suspension (10) dont l'extrémité supérieure comporte des moyens d'accrochage (11) sur les moyens d'ancrage (12) et dont l'extrémité inférieure comporte des moyens de fixation (14) des moyens d'équipement électrique, les moyens en forme de colonne de suspension (10) comportant une partie interne (16) et une partie externe (15) télescopiques l'une dans l'autre, l'une parmi la partie interne (16) et la partie externe (15) comprenant l'extrémité supérieure des moyens en forme de colonne de suspension et l'autre parmi la partie interne (16) et la partie externe (15) comprenant l'extrémité inférieure des moyens en forme de colonne de suspension (10),
la partie interne et la partie externe (15, 16) télescopiques l'une dans l'autre permettant un réglage de hauteur (17) entre les moyens d'ancrage et les moyens d'équipement électrique lors de la phase de montage de ceux-ci,
**caractérisé en ce que** la partie interne (16) et la partie externe (15) télescopiques des moyens en forme de colonne de suspension (10) sont configurées pour être déplacées en rotation l'une par rapport à l'autre pour permettre en outre un réglage angulaire (18) entre les moyens d'ancrage (12) et les moyens d'équipement électrique lors de la phase de montage de ceux-ci,
**en ce que** le système de fixation par suspension comporte des moyens (19) de blocage temporaire en position de la partie interne (16) et de la partie externe (15) télescopiques des moyens en forme de colonne de suspension (10) lors de la phase de montage des moyens d'équipement électrique, et
**en ce que en ce que** lesdits moyens de blocage temporaire comprennent un organe de serrage traversant ladite partie externe (15) et adapté pour venir en appui contre ladite partie interne (16).

2. Système de fixation par suspension de moyens d'équipement électrique selon la revendication 1, **caractérisé en ce que** l'organe de serrage comporte une vis (19) engagée dans un trou taraudé de la partie externe des moyens en forme de colonne.

3. Système de fixation par suspension de moyens d'équipement électrique selon la revendication 1 ou 2, **caractérisé en ce qu'**il comporte des moyens de fixation définitive en position de la partie interne (16) et de la partie externe (15) des moyens en forme de colonne (10) une fois le montage des moyens d'équipement électrique réalisé, et
**en ce que en ce que** les moyens de fixation définitive comprennent des moyens choisis dans le groupe comprenant :
- au moins une vis auto-foreuse traversant lesdites parties interne (16) et externe (15),
- au moins un point de soudure de ladite partie interne (16) et de ladite partie externe (15), et
- au moins un rivet traversant lesdites parties interne (16) et externe (15).

4. Système de fixation par suspension de moyens d'équipement électrique selon l'une quelconque des revendications précédentes, **caractérisé en ce que** les moyens d'ancrage (12) notamment associés au plafond du local, comprennent des rails de support.

5. Système de fixation par suspension de moyens d'équipement électrique selon l'une quelconque des revendications précédentes, **caractérisé en ce que** les moyens d'équipement électrique comporte en outre des appareils électriques (23).

6. Système de fixation par suspension de moyens d'équipement électrique selon l'une quelconque des revendications précédentes, **caractérisé en ce que** les moyens d'équipement électrique comporte en outre des moyens formant chemin de câble électrique (21).

## Patentansprüche

1. Befestigungssystem durch Aufhängung von elektrischen Ausrüstungsmitteln unter Verankerungsmitteln, die insbesondere der Decke eines Raums eines Schiffes zugeordnet sind, des Typs, der Mittel (10) in Form einer Hängesäule aufweist, deren oberes Ende Mittel (11) zum Befestigen an den Verankerungsmitteln (12) aufweist und deren unteres Ende Mittel (14) zum Festlegen der elektrischen Ausrüstungsmittel umfasst, wobei die Mittel (10) in Form einer Hängesäule ein Innenteil (16) und ein Außenteil (15), die teleskopisch ineinander geführt sind, aufweisen, wobei ein Teil von dem Innenteil (16) und Außenteil (15) das obere Ende der Mittel in Form eine Hängesäule umfasst und das andere Teil von dem Innenteil (16) und Außenteil (15) das untere Ende der Mittel (10) in Form einer Hängesäule umfasst,
wobei das Innenteil (16) und das Außenteil (15), die teleskopisch ineinander geführt sind, eine Einstellung der Höhe (17) zwischen den Verankerungsmitteln und den elektrischen Ausrüstungsmitteln bei der Montagephase derselben ermöglichen,
**dadurch gekennzeichnet, dass** das Innenteil (16) und das Außenteil (15), die teleskopisch ineinander geführt sind, der Mittel (10) in Form einer Hängesäule ausgebildet sind, zueinander hinsichtlich einer Drehung bewegt zu werden, um außerdem eine Winkeleinstellung (18) zwischen den Verankerungsmitteln (12) und den elektrischen Ausrüstungsmitteln bei der Montagephase derselben zu ermöglichen,
dass das Befestigungssystem durch Aufhängung Mittel (19) zum temporären Blockieren hinsichtlich der Position des Innenteils (16) und des Außenteils (15), die teleskopisch ineinander geführt sind, der Mittel (10) in Form einer Hängesäule bei der Montagephase der elektrischen Ausrüstungsmittel aufweist, und
dass die Mittel zum temporären Blockieren ein Klemmelement umfassen, das das Außenteil (15) durchquert und geeignet ist, in Anlage gegen das Innenteil (16) zu kommen.

2. Befestigungssystem durch Aufhängung von elektrischen Ausrüstungsmitteln nach Anspruch 1, **dadurch gekennzeichnet, dass** das Klemmelement eine Schraube (19) aufweist, die in ein Gewindeloch des Außenteils der Mittel in Form einer Säule eingreift.

3. Befestigungssystem durch Aufhängung von elektrischen Ausrüstungsmitteln nach Anspruch 1 oder 2, **dadurch gekennzeichnet, dass** es Mittel zur endgültigen Befestigung des Innenteils (16) und des Außenteils (15) der Mittel (10) in Form einer Säule in ihrer Position aufweist, sobald die Montage der elektrischen Ausrüstungsmittel durchgeführt ist, und
dass die Mittel zur endgültigen Befestigung Mittel umfassen, ausgewählt aus der Gruppe umfassend:
- mindestens eine selbstschneidende Schraube, die das Innenteil (16) und das Außenteil (15) durchquert,
- mindestens einen Schweißpunkt zwischen dem Innenteil (16) und dem Außenteil (15) und
- mindestens einen Niet, der das Innenteil (16) und das Außenteil (15) durchquert.

4. Befestigungssystem durch Aufhängung von elektrischen Ausrüstungsmitteln nach einem beliebigen der vorhergehenden Ansprüche, **dadurch gekennzeichnet, dass** die Verankerungsmittel (12), die insbesondere der Decke des Raums zugeordnet sind, Trägerschienen umfassen.

5. Befestigungssystem durch Aufhängung von elektrischen Ausrüstungsmitteln nach einem beliebigen der vorhergehenden Ansprüche, **dadurch gekennzeichnet, dass** die elektrischen Ausrüstungsmittel außerdem elektrische Geräte (23) aufweisen.

6. Befestigungssystem durch Aufhängung von elektrischen Ausrüstungsmitteln nach einem beliebigen der vorhergehenden Ansprüche, **dadurch gekennzeichnet, dass** die elektrischen Ausrüstungsmittel außerdem Mittel (21) aufweisen, die elektrische Kabelwege bilden.

## Claims

1. System for fixing by suspension of electrical equipment means beneath anchorage means in particular connected to the ceiling of an area of a boat, of the type comprising means in the form of a suspension column (10), the upper end of which comprises hooking means (11) on the anchorage means (12), and the lower end of which comprises fixing means (14) for the electrical equipment means, the means in the form of a suspension column (10) comprising an internal part (16) and an external part (15) which telescope one into the other, one of the internal part (16) and the external part (15) comprising the upper end of the means in the form of a suspension column, and the other of the internal part (16) and the external part (15) comprising the lower end of the means in the form of a suspension column (10),
the internal part (16) and the external part (15) which telescope one into the other allowing adjustment in height (17) between the anchorage means and the electrical equipment means during the phase of mounting of the latter two,
**characterised in that** the telescopic internal part (16) and the telescopic external part (15) of the means in the form of a suspension column (10) are configured in order to be displaced in rotation one relative to the other in order to allow, furthermore, angular adjustment (18) between the anchorage means (12) and the electrical equipment means during the phase of mounting of the latter two,
**in that** the system for fixing by suspension comprises means (19) for temporary locking in position of the telescopic internal part (16) and the telescopic external part (15) of the means in the form of a suspension column (10) during the course of mounting of the electrical equipment means, and
**in that** said temporary locking means comprise a tightening member traversing said external part (15) and adapted to come to abut against said internal part (16).

2. System for fixing by suspension of electrical equipment means according to claim 1, **characterised in that** the tightening member comprises a screw (19) engaged in a threaded hole of the external part of the means in the form of a column.

3. System for fixing by suspension of electrical equipment means according to claim 1 or 2, **characterised in that** it comprises means for definitive fixing in position of the internal part (16) and of the external part (15) of the means in the form of a column (10) once mounting of the electrical equipment means is achieved, and
**in that** the definitive fixing means comprise means chosen from the group comprising:
- at least one self-tapping screw traversing said internal (16) and external (15) parts,
- at least one spot welding of said internal part (16) and said external part (15), and
- at least one rivet traversing said internal (16) and external (15) parts.

4. System for fixing by suspension of electrical equipment means according to any of the preceding claims, **characterised in that** the anchorage means (12), in particular connected to the ceiling of the area, comprise support rails.

5. System for fixing by suspension of electrical equipment means according to any of the preceding claims, **characterised in that** the electrical equipment means comprise, furthermore, electrical apparatus (23).

6. System for fixing by suspension of electrical equipment means according to any of the preceding claims, **characterised in that** the electrical equipment means comprise, furthermore, means forming an electrical cable trough (21).
